# FASCICULE DE BREVET EUROPEEN

(11) **EP 3 142 354 B1**
(45) Date de publication et mention de la délivrance du brevet: **14.03.2018**
(21) Numéro de dépôt: 16188018.2
(22) Date de dépôt: 09.09.2016
(51) Int. Cl.: H04N 5/232, H04N 5/235

(54) **DRONE AVEC CAMÉRA À VISÉE FRONTALE AVEC SEGMENTATION DE L'IMAGE DU CIEL POUR LE CONTRÔLE DE L'AUTOEXPOSITION**
DROHNE MIT FRONTAL AUSGERICHTETER KAMERA MIT BILDSEGMENTIERUNG DES HIMMELS FÜR DIE KONTROLLE DER AUTOMATISCHEN BELICHTUNG
DRONE WITH FORWARD-LOOKING CAMERA WITH SEGMENTATION OF THE IMAGE OF THE SKY IN ORDER TO CONTROL THE AUTOEXPOSURE

(30) Priorité: 10.09.2015 FR 1558421
(43) Date de publication de la demande: 15.03.2017
(73) Titulaire: Parrot Drones, 75010 Paris (FR)
(72) Inventeur: POCHON, Benoît, 94300 Vincennes (FR); BALLEY, Axel, 75019 Paris (FR); SEYDOUX, Henri, 75017 Paris (FR)
(74) Mandataire: Dupuis-Latour, Dominique

(56) Documents cités:
- JP-A- 2003 267 295
- US-A1- 2012 307 042
- US-A1- 2014 176 722
- RYO MIYAUCHI ET AL: "Development of omni-directional image stabilization system using camera posture information", ROBOTICS AND BIOMIMETICS, 2007. ROBIO 2007. IEEE INTERNATIONAL CONFERENCE ON, IEEE, PISCATAWAY, NJ, USA, 15 décembre 2007 (2007-12-15), pages 920-925, XP031252928, ISBN: 978-1-4244-1761-2
- Anonymous: "The New Parrot Bebop Drone: Built for Stabilized Aerial Video | explora", , 6 octobre 2014 (2014-10-06), XP055233862, Extrait de l'Internet: URL:https://web.archive.org/web/2014100621 4813/http://www.bhphotovideo.com/explora/v ideo/news/new-parrot-bebop-drone-built-sta bilized-aerial-video [extrait le 2015-12-04]
- YING MAI ET AL: "The Analysis of Image Stabilization Technology Based on Small-UAV Airborne Video", COMPUTER SCIENCE AND ELECTRONICS ENGINEERING (ICCSEE), 2012 INTERNATIONAL CONFERENCE ON, IEEE, 23 mars 2012 (2012-03-23), pages 586-589, XP032171263, DOI: 10.1109/ICCSEE.2012.77 ISBN: 978-1-4673-0689-8

## Description

L'invention concerne le traitement des images numériques captées par une caméra embarquée dans un appareil mobile, en particulier dans un engin volant motorisé tel qu'un drone.

L'invention s'applique avantageusement aux images recueillies par la caméra frontale d'un drone à voilure tournante tel qu'un quadricoptère.

L'*AR.Drone 2.0* ou le *Bebop Drone* de Parrot SA, Paris, France sont des exemples typiques de tels quadricoptères. Ils sont équipés d'une série de capteurs (accéléromètres, gyromètres 3 axes, altimètre), d'une caméra frontale captant une image de la scène vers laquelle est dirigé le drone et d'une caméra de visée verticale captant une image du terrain survolé. Ils sont pourvus de rotors multiples entrainés par des moteurs respectifs commandables de manière différenciée afin de piloter le drone en attitude et en vitesse. Divers aspects de ces drones sont décrits notamment dans les WO 2010/061099 A2, EP 2 364 757 A1, EP 2 613 213 A1 ou encore EP 2 613 214 A1 (Parrot SA).

La caméra video frontale est utilisable pour un pilotage "en mode immersif", c'est-à-dire où l'utilisateur se sert de l'image de la caméra de la même façon que s'il se trouvait lui-même à bord du drone. Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

Ces images étant destinées à être enregistrées et communiquées, il est souhaitable qu'elles présentent le moins de défauts possible, notamment de défauts provoqués par le comportement du drone qui, en pratique, introduit divers artefacts intempestifs sur l'image finale présentée à l'utilisateur.

Ces défauts peuvent être tolérables dans une configuration de "pilotage immersif". En revanche, s'il s'agit d'utiliser le drone à la manière d'une caméra video mobile pour capter des séquences qui seront enregistrées et restituées ultérieurement, ces défauts sont extrêmement gênants, de sorte qu'il est souhaitable de les réduire à un minimum.

Une technique dite EIS (*Electronic Image Stabilization*) consiste à acquérir sur le capteur une zone fixe de plus grande étendue que la zone de capture qui sera utilisée. La compensation est opérée par une translation de la zone de capture sur la zone d'acquisition, en sens contraire du mouvement à compenser, le capteur ne transmettant qu'une sous-partie correspondant à l'image stabilisée. La mise en oeuvre d'une telle compensation est simple. En revanche, l'amplitude de compensation est limitée par le rapport entre la taille de la zone de capture et celle de la zone d'acquisition, c'est-à-dire la taille effective du capteur utilisé. Concrètement, l'amplitude maximale de compensation d'angle est limitée à quelques degrés.

L'article de Miyauchi R et al., "Development of Omni-Directional Image Stabilization System Using Camera Posture Information", Proceedings of the 2007 IEEE International Conference on Robotics and Biomimetics, Dec. 15-18, 2007, pp.920-925 propose d'appliquer une telle technique EIS à l'image captée par une caméra munie d'un objectif à champ hémisphérique de type *"fisheye",* c'est-à-dire couvrant un champ d'environ 180°. L'image brute est acquise en totalité (ce qui est possible en temps réel car il s'agit d'un capteur CCD basse résolution), soumise à un traitement de redressement (pour compenser les distorsions du *fisheye*) et ensuite de fenêtrage dynamique en fonction des mouvements du robot portant la caméra.

Cette technique de stabilisation d'image n'est toutefois possible que parce que la caméra est une caméra à capteur CCD basse résolution (640 x 480 pixels, soit 0,3 Mpixel). Elle serait en revanche inapplicable à la stabilisation d'une image utile de qualité HD (1920 x 1080 pixels, soit 2 Mpixel), elle-même fenêtrée sur une image *fisheye* brute de très haute résolution, par exemple formée sur un capteur de résolution 14 Mpixel : si l'on transférait dans ces conditions la totalité de l'image brute pour traitement, ceci correspondrait à un flux de données de pixel de 14 Mpixel pour chaque image, conduisant à une cadence d'images (*framerate*) de l'ordre de 6 images par seconde (ips) à cette résolution, ce qui serait insuffisant pour une séquence video fluide, nécessitant un *framerate* proche de 30 ips.

De plus, la simple translation d'une zone de l'image n'est pas mathématiquement suffisante pour compenser une rotation de la caméra, car il ne s'agit pas d'une véritable correction du changement de perspective induit par des rotations. Enfin, il s'agit d'une compensation par post-traitement des données d'images acquises par le capteur, ce qui ne permet pas de compenser certains effets en temps réel.

Dans le cas du *Bebop Drone* précité, celui-ci met en oeuvre une caméra munie d'un objectif à champ hémisphérique de type *fisheye* couvrant un champ d'environ 180° formant une image brute sur un capteur de résolution 14 Mpixel (4608 x 3288 pixels), ensuite fenêtrée en temps réel sur une image de qualité HD (1920 x 1080 pixels, soit 2 Mpixel).

Un article publié sur Internet de Timothy McDougal intitulé "The New Parrot Bebop Drone: Built for Stabilized Aerial Video" daté du 06.10.2014 (XP055233862) décrit en particulier cet appareil *Bebop Drone,* avec son objectif *fisheye* associé à un système de stabilisation et de contrôle de l'image.

Plus précisément, dans cet appareil, une fenêtre particulière (ci-après "zone de capture") est sélectionnée dans l'image hémisphérique d'ensemble formée à la surface du capteur. Cette fenêtre est mobile en rotation et en translation, et déplacée en permanence en fonction des mouvements du drone déterminés par la centrale inertielle, et en sens contraire de ces mouvements. L'image recueillie par l'objectif *fisheye* subit certes les mêmes mouvements d'oscillation et de rotation qu'une caméra conventionnelle, mais le déplacement de la zone image est asservi de manière à compenser ces mouvements et produire ainsi une image stabilisée à l'égard des mouvements du drone.

L'image de la zone de capture, plus exactement une partie utile (ci-après "zone utile") de celle-ci fait ensuite l'objet d'un traitement de reprojection pour compenser les distorsions géométriques introduites par l'objectif fis*heye :* redressement des lignes droites courbées par l'objectif, rétablissement d'un grossissement uniforme entre le centre et la périphérie de l'image, etc. L'image finale obtenue ("zone utile redressée") est ensuite transmise à l'utilisateur pour visualisation sur écran, enregistrement, etc. On dispose ainsi d'une "caméra virtuelle" en extrayant de la scène totale capturée une zone particulière (la zone de capture) qui est dynamiquement déplacée, en rotation et en translation, dans l'image initiale en sens inverse des mouvements du drone afin d'annihiler les oscillations qui sinon seraient observées sur l'image finale présentée à l'utilisateur, puis en appliquant un traitement de redressement d'image pour délivrer une représentation de la scène dépourvue de distorsions géométriques et autres.

Cette technique, mise en oeuvre au sein de l'appareil *Bebop Drone* présenté dans l'article précité de Timothy McDougal, est exposée en détail dans le EP 2 933 775 A1 (Parrot), publié le 21.10.2015.

La présente invention vise l'élimination d'un problème particulier qui apparait lors de certaines évolutions du drone.

Ce problème concerne le contrôle de l'algorithme d'autoexposition (AE), qui analyse la luminosité de différentes régions de l'image et choisit automatiquement pour le capteur un couple {temps d'exposition, gain} permettant de capturer n'importe quelle scène avec une même luminosité cible. Ce choix est opéré à partir d'une analyse d'une version de l'image de définition réduite (par exemple 64 x 48 pixels), ci-après "imagette", obtenue par sous-échantillonnage ou décimation, et dont sont extraits des histogrammes de luminosité ainsi qu'éventuellement d'autres paramètres, ces différentes données de départ étant désignées ci-après par le terme général de "statistiques" de l'image.

Dans le cas précité d'une zone de capture extraite de l'image globale recueillie par le capteur, c'est le contenu de l'imagette issue de la zone de capture qui produit les statistiques.

Mais, comme on l'a expliqué plus haut, cette zone de capture est plus grande que la zone utile finale qui sera présentée à l'utilisateur, de sorte que l'algorithme d'autoexposition peut prendre des décisions basées sur des éléments de la scène que l'utilisateur ne voit pas, c'est-à-dire des éléments situés à l'intérieur de la zone de capture mais à l'extérieur de la zone utile.

Or, la scène que l'on cherche à bien exposer est celle qui est vue par l'utilisateur (la zone utile), et non la zone de capture, qui diffère de cette dernière.

Dans le cas typique d'une image comprenant une partie de ciel et une partie de sol, la proportion entre ciel et sol variera selon l'inclinaison de la caméra, qui elle-même varie en permanence en fonction de l'attitude du drone. De fait, si le drone passe d'une attitude de vol stationnaire à une attitude inclinée, plongeante (ce basculement produisant un déplacement linéaire vers l'avant), alors la caméra, baissée vers le sol (car elle est liée au corps du drone) captera une proportion bien plus importante de sol. Comme le sol est plus sombre, l'asservissement de l'algorithme d'autoex-position tendra à compenser cette variation de luminosité par une augmentation du temps d'exposition et/ou du gain.

Toutefois, du fait du déplacement de la zone de capture dans l'image initiale et de la reprojection opérée pour en extraire la zone utile, l'utilisateur verra toujours la même scène. Mais cette scène aura été temporairement surexposée du fait de l'action correctrice de l'autoexposition, surexposition qui disparaitra quand le drone retournera à son attitude initiale - et sans pour autant que les contours de l'image vue par l'utilisateur n'aient changé.

De plus, la dynamique limitée du capteur ne permet pas d'exposer correctement à la fois le ciel et le sol dans toutes les situations.

On connait certes des techniques d'imagerie de type "HDR" (à large gamme dynamique) qui consistent à fusionner des prises de vue effectuées en séquence à très faible intervalle avec différents réglages d'exposition, chaque prise de vue ayant sa gamme dynamique propre. Mais dans le cas particulier d'une caméra embarquée sur un drone évoluant en vol, cette technique n'est pas utilisable car elle introduirait des artefacts temporels importants du fait de la rapidité des déplacements du drone (et donc de la caméra) et des vibrations auxquelles il est sujet.

Le but de l'invention est de proposer une technique permettant, de façon dynamique et en temps réel, de déterminer quelle partie de l'image de la scène captée par la caméra correspond au ciel, et quelle partie correspond au sol, ou bien de déterminer qu'il n'est pas possible d'opérer une délimitation entre ciel et sol (comme dans le cas typique d'un drone volant en intérieur).

Après cette détermination, l'image sera ensuite segmentée en une zone de ciel et une zone de sol, de manière à pouvoir traiter différemment la zone de ciel et la zone de sol de l'imagette, généralement en choisissant d'exposer uniquement (ou principalement) pour la zone de sol.

L'invention propose à cet effet, essentiellement, de calculer pour chaque pixel ou macropixel (ci-après "donnée d'image") un coefficient de pondération représentatif d'une probabilité d'appartenance de ce pixel ou macropixel au ciel (ou, inversement, au sol) de manière à pouvoir :
- exposer pour la zone comportant le plus de détails (généralement le sol, rarement le ciel), et
- exposer de façon uniforme même si le ratio ciel/sol varie beaucoup et rapidement (typiquement lors des brusques changements d'attitude du drone) et en compensant les distorsions introduites par la lentille de l'objectif *fisheye.*

Plus précisément, l'invention propose un drone comprenant de manière en elle-même connue, notamment de l'appareil *Bebop Drone* selon une technique exposée en détail dans le EP 2 933 775 A1 précité :
- une caméra liée au corps du drone, comprenant un objectif à champ hémisphérique de type *fisheye* pointant dans une direction fixe par rapport au corps du drone, un capteur numérique recueillant l'image formée par l'objectif, et des moyens de contrôle automatique de l'exposition du capteur ;
- une centrale inertielle, apte à mesurer les angles d'Euler caractérisant l'attitude instantanée du drone par rapport à un repère terrestre absolu et délivrant en sortie des données d'attitude courante du drone ;
- des moyens extracteurs, aptes à définir, dans ladite image formée par l'objectif sur l'étendue du capteur, la position d'une zone de capture de dimension réduite ;
- des moyens d'asservissement, recevant en entrée les données d'attitude courante du drone et aptes à modifier dynamiquement la position et l'orientation de la zone de capture dans ladite image dans un sens contraire de celui des changements des valeurs des angles mesurés par la centrale inertielle ;
- des moyens de reprojection, recevant en entrée des données d'image, formées de pixels ou de macropixels, d'une zone utile extraite de la zone de capture et délivrant en sortie des données d'image redressée correspondantes, compensées des distorsions géométriques introduites par l'objectif *fisheye ;* et
- des moyens d'analyse, aptes à définir une pluralité de régions d'intérêt ROI réparties dans la zone utile, et à commander les moyens de contrôle dynamique d'exposition en fonction des données d'image respectives contenues dans une imagette issue de la zone utile, dans chaque ROI. Les moyens d'analyse sont en outre aptes à :
   - analyser lesdites données d'image courantes de la zone utile de manière à attribuer à chacune de ces données un coefficient pondérateur représentatif d'une probabilité d'appartenance au ciel ;
   - définir dynamiquement à chaque image une frontière de segmentation de la zone utile entre une zone de ciel et une zone de sol, en fonction des coefficients pondérateurs attribués à chaque donnée d'image ;
   - définir deux groupes distincts de ROIS, respectivement pour la zone de ciel et pour la zone de sol ; et
   - commander les moyens de contrôle dynamique d'exposition en fonction des données d'image respectives contenues dans l'imagette issue de la zone utile, dans des ROIs de l'un desdits groupes sélectionné.

Le coefficient pondérateur représentatif d'une probabilité d'appartenance au ciel peut être un coefficient fonction :
- de la position de la donnée d'image courante analysée par les moyens d'analyse par rapport à une direction d'horizon théorique délivrée par la centrale inertielle ; et/ou
- des données d'image du voisinage de la donnée d'image courante analysée par les moyens d'analyse ; et/ou
- de l'altitude du drone par rapport au sol, le drone comprenant des moyens aptes à délivrer une valeur estimée de cette altitude ; et/ou
- de l'illuminant de la scène captée par la caméra, la caméra comprenant des moyens d'analyse de cet illuminant ; et/ou
- de l'inclinaison du drone en tangage par rapport à l'horizontale.

Les ROIs peuvent être des ROIs dont la dimension et/ou le positionnement sont définis dynamiquement à chaque image dans la zone utile, ou bien des ROIs définies par une grille de ROIs réparties uniformément et de façon prédéterminée dans la zone utile.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue d'ensemble montrant le drone et l'appareil de télécommande associé permettant son pilotage à distance.
Les Figures 2a et 2b illustrent les modifications des directions de visée de la caméra entrainées par un basculement vers l'avant du drone, par exemple lors d'une phase d'accélération.
La Figure 3 illustre en (a1)-(a3) les étapes successives de fenêtrage et de correction des distorsions appliquées à l'image formée sur le capteur de la caméra du drone de manière à produire une image redressée, et en (b1)-(b3) les étapes correspondantes lorsque l'attitude du drone se modifie, avec la caméra baissée vers le sol.
La Figure 4 illustre en (a) et en (b) les histogrammes de luminosité respectivement obtenus par analyse des zones de capture (a2) et (b2) de la Figure 3.
La Figure 5 illustre sous forme de schéma par blocs fonctionnels les différents modules participant à la mise en oeuvre de l'invention.
La Figure 6 est un organigramme explicitant les principales étapes successives de mise en oeuvre de l'invention.
La Figure 7 illustre plus précisément les différentes étapes d'analyse permettant d'aboutir à une pondération de chaque pixel de l'image.
La Figure 8 illustre l'analyse de l'image selon une première variante, mettant en oeuvre des régions d'intérêt définies automatiquement à l'intérieur de cette zone de capture.
La Figure 9 illustre l'analyse de l'image selon une seconde variante, mettant en oeuvre un quadrillage de cette zone de capture.

On va maintenant décrire des exemples de mise en oeuvre de la présente invention.

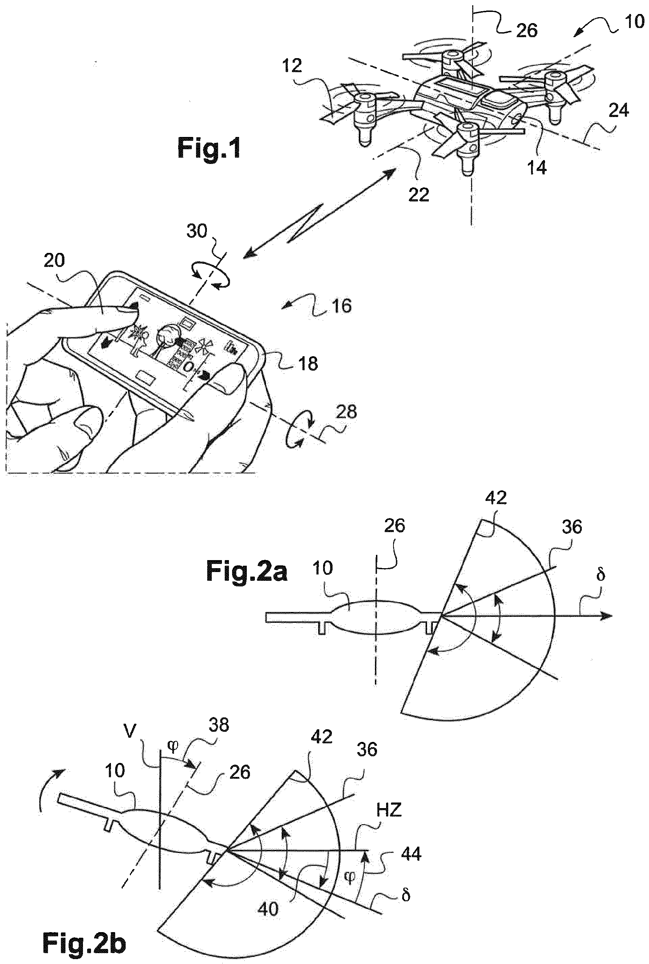

Sur la Figure 1, la référence 10 désigne de façon générale un drone, qui est par exemple un quadricoptère tel que le modèle *Bebop Drone* de Parrot SA, Paris, France. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle est orienté le drone.

Le drone comporte également une caméra à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler (tangage *ϕ*, roulis *θ* et lacet *ψ*) décrivant l'inclinaison du drone par rapport à un plan horizontal d'un repère terrestre fixe. Un télémètre à ultrasons disposé sous le drone fournit par ailleurs une mesure de l'altitude par rapport au sol.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone, par exemple de type réseau local *Wi-Fi* (IEEE 802.11), pour l'échange bidirectionnel de données du drone 10 vers l'appareil 16, notamment pour la transmission de l'image captée par la caméra 14, et de l'appareil 16 vers le drone 10 pour l'envoi de commandes de pilotage.

L'appareil de télécommande 16 est également pourvu de capteurs d'inclinaison permettant de contrôler l'attitude du drone en imprimant à l'appareil des inclinaisons correspondantes selon des axes de roulis et de tangage, étant entendu que les deux composantes longitudinale et transversale de la vitesse horizontale du drone 10 seront intimement liées à l'inclinaison suivant les deux axes respectifs de tangage et de roulis. Le pilotage du drone consiste à faire évoluer celui-ci par :
a) rotation autour d'un axe de tangage 22, pour le faire avancer ou reculer ;
b) rotation autour d'un axe de roulis 24, pour le décaler vers la droite ou vers la gauche ;
c) rotation autour d'un axe de lacet 26, pour faire pivoter vers la droite ou vers la gauche l'axe principal du drone ; et
d) translation vers le bas ou vers le haut par changement du régime des gaz, de manière à respectivement réduire ou augmenter l'altitude du drone.

Lorsque ces commandes de pilotage sont appliquées par l'utilisateur à partir de l'appareil de télécommande 16, les commandes a) et b) de pivotement autour des axes de tangage 22 et de roulis 24 sont obtenues par des inclinaisons de l'appareil 16 respectivement autour de son axe longitudinal 28 et de son axe transversal 30 : par exemple, pour faire avancer le drone il suffit d'incliner l'appareil de télécommande 16 vers l'avant en le penchant autour de l'axe 28, pour le déporter à droite il suffit d'incliner l'appareil de télécommande 16 en le penchant autour de l'axe 30 vers la droite, etc. Les commandes c) et d), quant à elles, résultent d'actions appliquées par contact du doigt 20 de l'utilisateur sur des zones spécifiques correspondantes de l'écran tactile 18.

Le drone possède également un système automatique et autonome de stabilisation en vol stationnaire, activé notamment dès que l'utilisateur retire son doigt de l'écran tactile de l'appareil, ou automatiquement à la fin de la phase de décollage, ou encore en cas d'interruption de la liaison radio entre l'appareil et le drone.

La Figure 2a illustre schématiquement, de profil, l'attitude du drone lorsque celui-ci est immobile, dans un état de sustentation.

On a schématisé en 36 le champ couvert par une caméra frontale 14 de type conventionnel, par exemple une caméra couvrant un champ de 54° et dont l'axe de vision δ est centré sur l'horizon.

Si, comme illustré Figure 2b, le drone progresse vers l'avant avec une vitesse horizontale non nulle, par conception l'axe 26 du drone sera incliné vers l'avant d'un angle *ϕ* (angle de tangage) par rapport à la verticale V. Cette inclinaison vers l'avant, schématisée par la flèche 38, implique une inclinaison de même valeur, schématisée par la flèche 40, de l'axe δ de la caméra par rapport au plan de l'horizon HZ. On comprend ainsi qu'au fil des évolutions du drone, de ses accélérations, ralentissements, etc. l'axe δ oscille en permanence autour de la direction de l'horizon HZ, ce qui se traduira sur l'image par des mouvements d'oscillation permanents vers le haut et vers le bas.

De façon comparable, si le drone se décale vers la droite ou vers la gauche, ce mouvement s'accompagnera d'un pivotement autour de l'axe de roulis 24, qui se traduira sur l'image par des rotations dans un sens ou dans l'autre de la scène captée par la caméra.

Pour pallier ces inconvénients il a été proposé, comme cela est exposé dans le EP 2 933 775 A1 précité, de munir la caméra d'un objectif à champ hémisphérique de type *fisheye* couvrant un champ d'environ 180°, schématisé en 42 sur la Figure 2a. L'image captée par la caméra munie de cet objectif *fisheye* subira certes les mêmes mouvements d'oscillation et de rotation qu'une caméra conventionnelle mais on n'utilisera qu'une partie du champ capté par cette caméra en sélectionnant une fenêtre particulière correspondant au secteur angulaire 36 capté par une caméra conventionnelle, et qui sera dynamiquement déplacée dans l'image hémisphérique en sens inverse des mouvements du drone tels que déterminés par la centrale inertielle, afin d'annihiler les oscillations qui sinon seraient observées sur l'image.

Ainsi, dans le cas illustré Figure 2b où le drone plonge vers le bas d'un angle de tangage *ϕ* (flèche 38) par rapport à la verticale V, la fenêtre de capture sera déplacée vers le haut (flèche 44) d'un angle de même valeur, ramenant ainsi dans la direction de l'horizon HZ l'axe central du secteur 36 d'une "caméra virtuelle" couvrant le champ correspondant à la zone image.

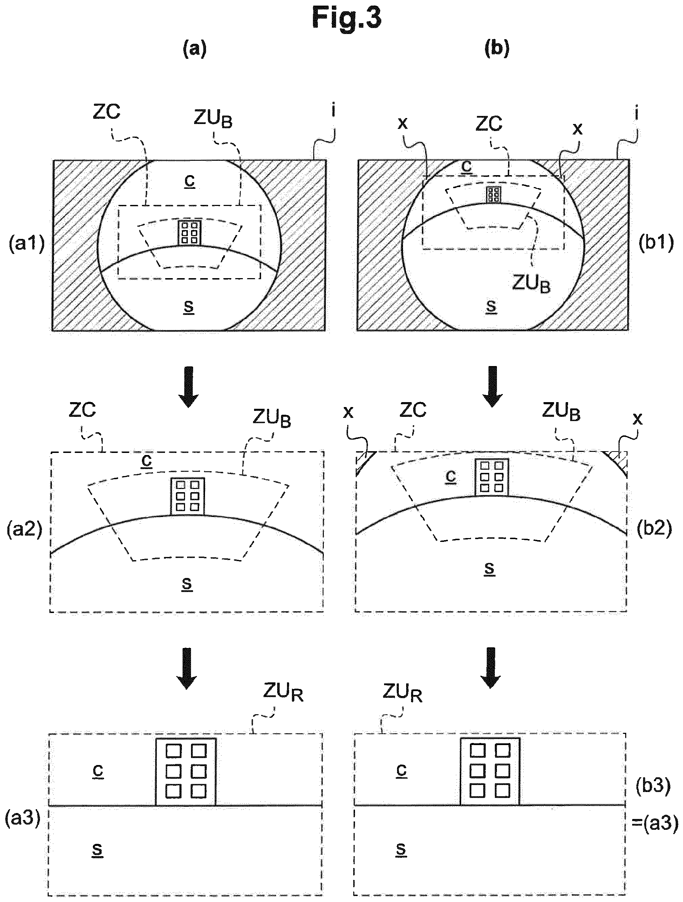

La Figure 3 montre en (a1) un exemple de scène, telle que recueillie par le capteur de la caméra video munie de l'objectif *fisheye.*

Comme on peut le constater, l'image I de cette scène comporte de très fortes distorsions géométriques, inhérentes à la couverture hémisphérique ou quasi-hémisphérique de l'objectif *fisheye,* redressée sur la surface plane du capteur.

Seule une partie de cette 'image I produite par l'objectif *fisheye* va être utilisée. Cette partie est déterminée en fonction i) de la direction dans laquelle est pointée la "caméra virtuelle", ii) du champ de vision de celle-ci (schématisé en 36 sur les Figures 2a et 2b) et iii) de son ratio largeur/ hauteur. On définit ainsi une "zone de capture" ZC contenant des données de pixel brutes incluant la "zone utile" brute ZU_{B} qui correspondra au champ de la "caméra virtuelle" après compensation des distorsions géométriques introduites par l'objectif *fisheye.*

On notera qu'il n'est pas utile de capturer la totalité des pixels de l'image I formée sur le capteur, mais seulement une fraction de ceux-ci, correspondant à la zone de capture ZC, par exemple une fenêtre ZC d'environ 2 Mpixel extraite d'une image I en qualité HD (1920 x 1080 pixels) produite par un capteur dont la résolution sera typiquement de 14 Mpixel (4608 x 3288 pixels). On ne transfère donc que les données de pixel de la zone de capture ZC réellement nécessaires, données qui peuvent alors être rafraichies à une cadence de 30 images/seconde sans difficulté particulière. On peut ainsi choisir un capteur de haute résolution tout en conservant un débit d'images élevé.

Les vues (a2) et (a3) de la Figure 3 illustrent les traitements opérés sur les données de pixel de la zone de capture ZC pour parvenir à l'image finale compensée des distorsions géométriques : à partir des données de pixel transférées de la zone de capture ZC (vue(a2)) un algorithme extrait les données de pixel de la zone utile brute ZU_{B} et leur applique un maillage de triangles (technique en elle-même connue) puis redresse l'image par étirement de chaque triangle, pour donner une image utile redressée ZU_{R} (vue(a3)) avec des données de pixel rectifiées. Les lignes horizontales fortement courbées de l'image *fisheye* seront ainsi corrigées pour les rendre rectilignes et produire une image correspondant à une vision naturelle, dépourvue de distorsions géométriques.

Les vues (b1)-(b3) de la Figure 3 sont homologues des vues (a1)-(a3), dans une configuration où l'attitude du drone se modifie du fait d'une inclinaison de celui-ci vers l'avant (rotation autour de son axe de tangage), inclinaison consécutive par exemple à une transition d'une configuration immobile, en vol stationnaire, vers une configuration de progression vers l'avant (la vitesse linéaire du drone étant d'autant plus grande que son inclinaison est forte).

Comme illustré en (b1), pour compenser cette inclinaison du drone vers le bas, la zone de capture ZC est déplacée vers le haut de l'image, donc dans un sens contraire à celui de l'inclinaison du drone. Si la position relative de la zone utile brute ZU_{B} reste sensiblement la même à l'intérieur de la zone de capture ZC (pour permettre la poursuite de la scène visée), la zone de capture va en revanche inclure dorénavant une part beaucoup plus importante de sol S que de ciel C : si l'on compare ainsi les vues (a2) et (b2), on constate que dans la configuration initiale (vue(a2)) la proportion ciel/sol est d'environ 50/50 %, tandis que dans la configuration modifiée ((vue(b2)) la proportion ciel/sol est d'environ 25/75 %. De plus, si elle est fortement déplacée vers le haut la zone de capture peut inclure des zones X qui sont situées en dehors de la région de l'image circulaire formée par l'objectif *fisheye* sur le capteur.

En revanche, l'image finale ZU_{R} de la zone utile redressée (vue (b3)) sera sensiblement identique à ce qu'elle était (vue (a3)) avant le basculement du drone vers l'avant.

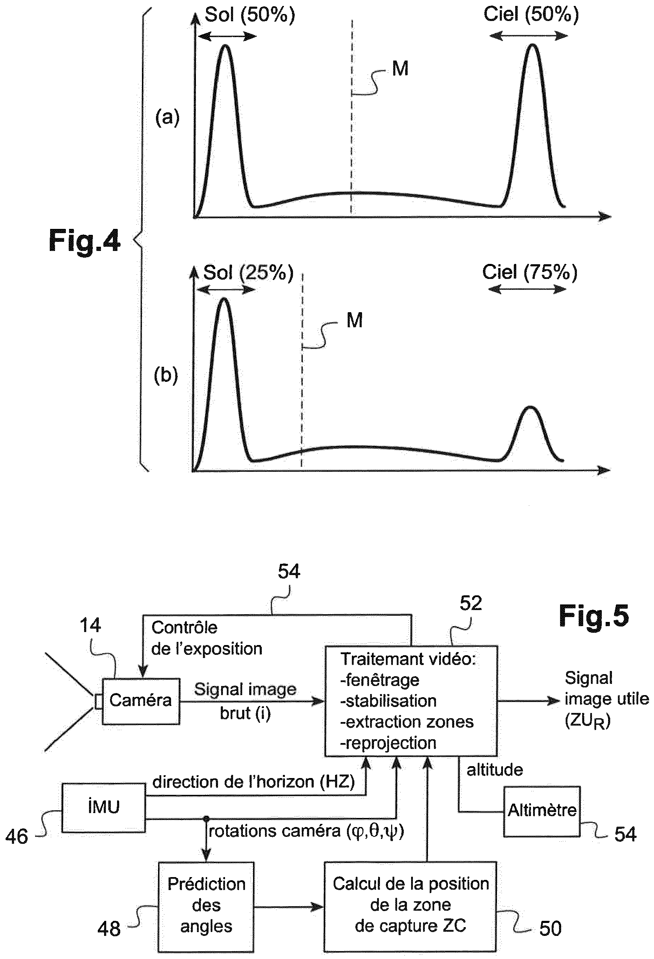

La Figure 4 illustre les histogrammes obtenus par analyse de la luminosité des pixels de l'imagette issue de la zone de capture ZC, respectivement en (a) dans le cas de la vue (a2) et en (b) dans le cas de la vue (b2).

Comme on peut le voir sur cette figure, le basculement du drone vers l'avant se traduit par une modification significative de l'histogramme de luminosité, avec un décalage vers la gauche de la valeur moyenne M du fait de l'augmentation du ratio sol/ciel dans l'image de la zone ZC. L'algorithme d'autoexposition interprétera ce changement de la valeur moyenne M comme un assombrissement de l'image, qui sera automatiquement compensé par une augmentation du temps d'exposition et/ou de la sensibilité de la caméra.

De ce fait, les images finales (a3) et (b3) respectivement obtenues (images de la zone utile redressée ZU_{R}), si elles présentent à l'utilisateur le même cadrage de la scène, différeront par leur réglage d'exposition, l'image de la vue (b3) étant plus claire que celle de la vue (a3) du fait de la plus grande proportion de sol dans la zone de capture de la vue (b2).

La Figure 5 illustre sous forme de schéma par blocs fonctionnels les différents modules participant à la mise en oeuvre de l'invention.

La caméra frontale 14 du drone délivre un signal d'image brut correspondant à l'image I. Cette caméra, mécaniquement liée au corps du drone, est sujette à des déplacements angulaires qui sont mesurés par une centrale inertielle (IMU) 12 liée au corps de drone et donc à la caméra. Les rotations de la caméra sont données par l'angle de tangage *ϕ*, l'angle de roulis *θ* et l'angle de lacet *ψ* décrivant l'inclinaison du drone dans les trois dimensions par rapport à un repère terrestre fixe (angles d'Euler). Ces données sont appliquées à un module 48 de prédiction des angles pilotant un module de calcul de la position de la zone de capture ZC dans l'image I. Un module 52 de traitement vidéo reçoit en entrée le signal d'image brut I et assure diverses opérations de fenêtrage en fonction de la position de la zone de capture ZC calculée par le module 50, de stabilisation de l'image, d'extraction et de redressement de la zone utile, pour délivrer en sortie à l'utilisateur un signal d'image utile ZU_{R} pour transmission à l'utilisateur, affichage et enregistrement éventuels.

Le module 52 assure également le contrôle (schématisé par le retour 54) des paramètres de fonctionnement de la caméra, en particulier le contrôle de l'autoexposition (AE).

D'autre part, pour la mise en oeuvre de la présente invention, la centrale inertielle 46 est également apte à délivrer au module 52 une estimée de la direction de l'horizon (HZ sur la Figure 2b), ou "horizon théorique", correspondant à l'orientation, par rapport au corps du drone, du plan du repère terrestre par rapport auquel sont mesurés les angles de tangage *ϕ* et de roulis *θ* caractérisant l'attitude instantanée du drone.

Enfin, le drone est pourvu de moyens de détermination d'altitude 54, par exemple des moyens tels que décrits dans le EP 2 644 240 A1 (Parrot), opérant en fonction des données produites par un capteur télémétrique à ultrasons et un capteur barométrique, appliquées à un filtre de Kalman permettant de délivrer une valeur estimée d'altitude absolue instantanée du drone dans un repère terrestre.

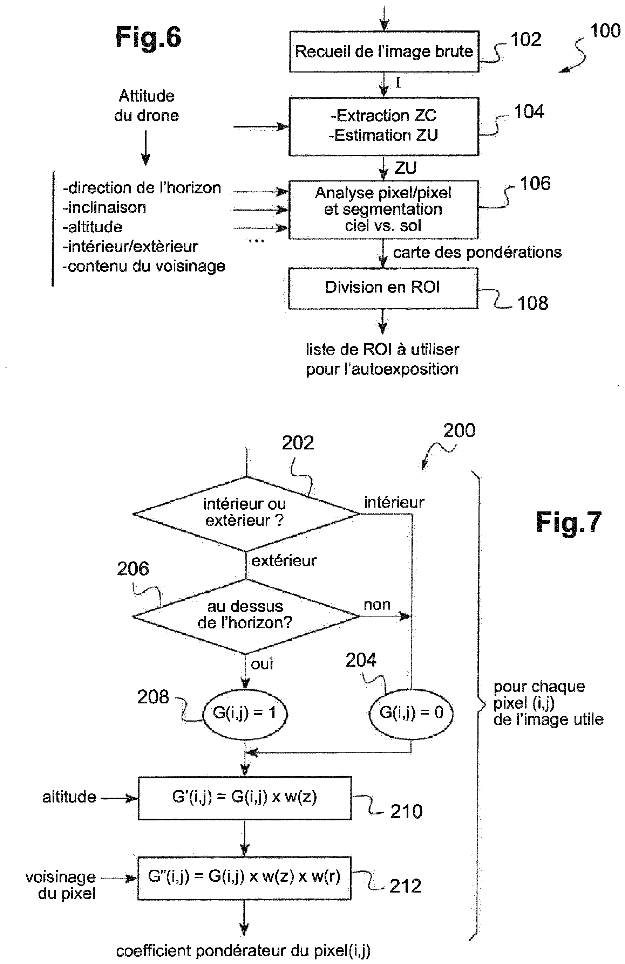

La Figure 6 est un organigramme explicitant les principales étapes successives de mise en oeuvre de l'invention.

Cet organigramme 100 comprend une étape initiale (bloc 102) de recueil de l'image brute I par la caméra, suivie d'une étape (bloc 104) d'extraction dans cette image brute de la zone de capture ZC en fonction des données d'attitude du drone délivrées par la centrale inertielle IMU, et d'estimation du contour de la zone utile ZU correspondant à l'image de la scène qui sera délivrée à l'utilisateur.

L'étape suivante (bloc 106), caractéristique de l'invention, consiste en une analyse pixel par pixel (ou macropixel par macropixel) des données d'image de la zone utile ZU, de la manière que l'on exposera en détail plus bas en référence à la Figure 7. Le résultat de cette analyse est l'attribution à chaque pixel (ou macropixel) d'un coefficient pondérateur reflétant une probabilité plus ou moins grande d'appartenance du pixel (ou macropixel) à une région de ciel de l'image, en fonction de plusieurs paramètres tels que direction de l'horizon, altitude du drone, contenu des pixels (ou macropixels) voisins, inclinaison instantanée du drone, etc., et la détermination d'une frontière de segmentation entre ciel et sol.

L'étape suivante (bloc 108) consiste à définir (selon des techniques en elles-mêmes connues, qui ne seront pas décrites plus en détail) une pluralité de régions d'intérêt, ROI, qui sont des sélections géométriques de zones de dimension réduite dans l'imagette issue de l'image à analyser. Un histogramme de luminosité est établi pour chacune de ces ROIs à partir des statistiques de l'imagette.

De façon caractéristique de l'invention, les ROIs utilisées par l'algorithme d'autoexposition sont sélectionnées ou pondérées en fonction de leur position par rapport à la frontière entre ciel et sol déterminée à l'étape précédente 106. Le résultat final est une liste limitée de ROIs qui seront utilisées par l'algorithme d'autoexposition pour l'ajustement du niveau d'exposition du capteur par analyse et comparaison des histogrammes de ces différentes ROIS, selon des techniques en elles-mêmes connues. Généralement, les ROIs sélectionnées seront celles correspondant à la zone de sol située au-dessous de la frontière de segmentation, dans la mesure où cette zone est celle qui contient le plus de détails et qu'il s'agit de celle pour laquelle on souhaite optimiser l'exposition (en variante, on pourrait toutefois choisir d'exposer pour le ciel plutôt que pour le sol, ou combiner en proportions variables les paramètres d'analyse des ROIs en zone de sol et en zone de ciel).

La Figure 7 illustre de manière plus précise la façon dont est opérée l'analyse pixel par pixel du bloc 106, pour attribuer à chaque pixel situé dans les limites de la zone utile ZU un coefficient pondérateur propre fonction de sa probabilité d'appartenance à une zone de ciel de l'image captée.

L'organigramme 200 comporte une première étape (test 202) consistant à déterminer si le drone se trouve en intérieur ou en extérieur (car c'est seulement dans ce dernier cas qu'il faudra rechercher une probabilité d'appartenance au ciel). Cette détermination peut être notamment réalisée par une analyse de l'illuminant de la scène, qui est un paramètre disponible en sortie de l'algorithme de balance automatique des blancs (AWB) mis en oeuvre par la caméra : ainsi, un illuminant D50 ou D65 correspond typiquement à une lumière naturelle en plein jour, ce qui indique que le drone évolue très vraisemblablement à l'extérieur.

S'il est déterminé au test 202 que le drone évolue en intérieur, alors un poids nul G(i,j) = 0 est attribué au pixel (i,j), car dans ce cas on considère que sa probabilité d'appartenance à une zone de ciel est nulle (bloc 204). Dans le cas contraire, on détermine ensuite si, en fonction de sa position dans l'image, le pixel est situé au-dessus ou au-dessous de l'horizon théorique tel que déterminé par la centrale inertielle IMU (test 206).

Si ce pixel est situé au-dessous de l'horizon, un poids nul G(i,j) = 0 lui est attribué (bloc 204). Dans le cas contraire, le poids G(i,j) est mis à 1 (bloc 208) pour indiquer une probabilité - à ce stade - d'appartenance au ciel de 100 %.

Cette probabilité doit être toutefois pondérée, car même si le pixel correspond à une zone en extérieur et située au-dessus de l'horizon, il peut se trouver dans une région assimilable à une zone de sol, par exemple s'il appartient à l'image d'un bâtiment, d'un arbre, etc., situés au-dessus de l'horizon : il s'agit de zones comportant des détails, qu'il convient de bien exposer, et qui ne font en tous cas pas partie du ciel bien que situées au-dessus de l'horizon.

Pour ce faire, une première pondération est appliquée (bloc 210) en fonction de l'altitude. Cette pondération repose sur a constatation de ce que, plus un drone vole haut, plus il y a de chance que l'horizon soit dégagé, c'est-à-dire que la partie de l'image située au-dessus de l'horizon ne soit pas remplie d'images de bâtiments, d'arbres, de collines, etc. On pondère alors le poids G(i,j) = 1 par une fonction w(z) variant de façon monotone (linéaire, par paliers ou tout autre progression appropriée) en fonction de l'altitude z, avec une valeur comprise entre w(0) = 0 et w(zₘₐₓ) = 1, zₘₐₓ étant une valeur maximale d'altitude, par exemple zₘₐₓ = 300 mètres. Le résultat est une valeur de coefficient pondérateur G'(i,j) = G(i,j) x w(z). Une deuxième pondération w(n) peut être appliquée (bloc 212) à la valeur G'(i,j) obtenue au bloc 210, en particulier en fonction de l'analyse du voisinage du pixel (i,j), c'est-à-dire une analyse (selon des techniques en elles-mêmes connues) de variance, de gradient, etc. par rapport aux pixels de l'image environnant le pixel (i,j) objet de la pondération.

D'autres pondérations encore peuvent être appliquées, par exemple en fonction de l'attitude du drone, notamment de son angle de tangage *ϕ* donné par la centrale inertielle IMU : si cette donnée indique que le drone est, à l'instant de l'analyse, fortement penché vers l'avant, la probabilité d'appartenance d'un pixel à une zone de ciel est moindre que si le drone est en vol stationnaire (attitude horizontale), ou *a fortiori* en une attitude cabrée lors d'une phase de forte décélération ou de marche arrière. L'analyse de l'organigramme 200 est effectuée pour chaque pixel (ou macropixel) de l'image de la zone utile, ce qui permet d'obtenir à l'issue de l'analyse une carte des pondérations de chaque pixel de cette image, reflétant la probabilité d'appartenance au ciel du pixel considéré. L'autoexposition pourra alors être mise en oeuvre en tenant compte de cette pondération, par exemple (mais de façon non limitative) en commandant l'autoexposition en fonction des données d'image exclusivement ou majoritairement de la zone de ciel.

Comme on l'a indiqué plus haut, l'algorithme d'autoexposition utilise une pluralité de régions d'intérêt ROIs réparties dans l'image.

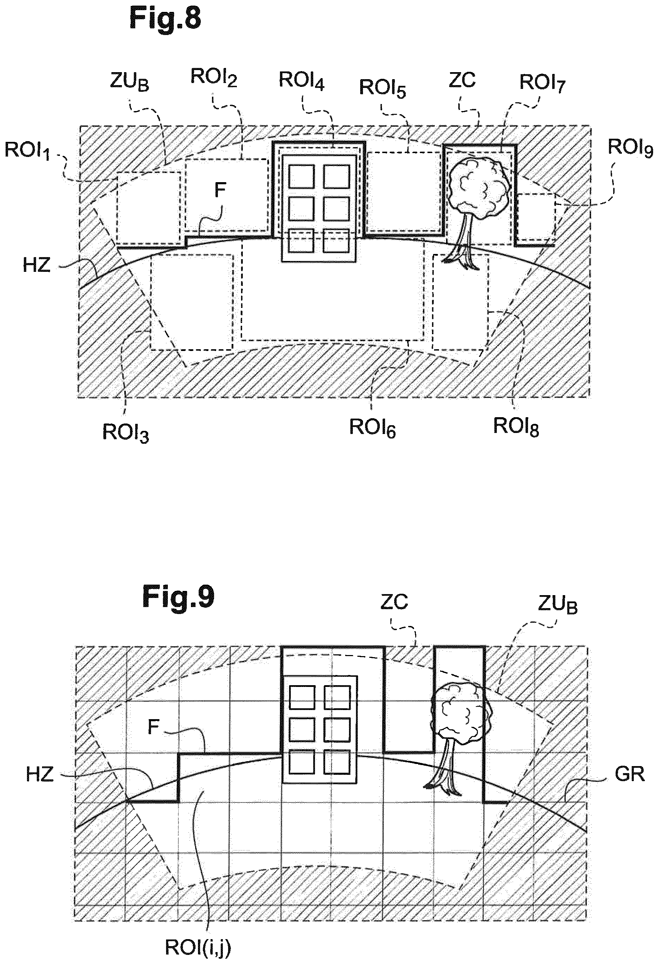

Dans une première variante de mise en oeuvre, illustrée Figure 8, l'auto-exposition opère à partir de ROIs dont la dimension et/ou le positionnement sont définis dynamiquement i) à l'intérieur de l'imagette issue de la zone utile ZU_{B} et ii) de façon caractéristique de l'invention, au-dessous de la frontière de segmentation F qui sépare la zone de ciel (au-dessus de la frontière F) et la zone de sol (au-dessous de la ligne frontière F).

Les ROIs sont réparties de manière à se situer totalement ou partiellement à l'intérieur de la zone utile ZU_{B}, c'est-à-dire que si l'algorithme de définition des ROIs génère des ROIs à l'extérieur de la zone utile ZU_{B}, ces dernières seront exclues de l'analyse ultérieure pour le contrôle de l'auto-exposition. De plus, par rapport à la frontière F, si l'algorithme de génération des ROIs définit par exemple les neuf régions ROI₁ ... ROI₉ illustrées Figure 8, alors le contrôle de l'autoexposition n'opèrera que sur la base des ROIs situées dans la zone de sol, au-dessous de la frontière F, à savoir les ROIs référencées ROI₃, ROI₄, ROI₆, ROI₇ et ROI₈ dans cet exemple. L'exposition se fera ainsi sur les parties de l'image comprenant le plus de détails, qui sont généralement celles qui intéressent l'utilisateur et pour lesquelles il convient d'optimiser l'exposition.

La Figure 9 illustre une deuxième variante de mise en oeuvre, où les ROIs ne sont plus définies de façon dynamique et avec une taille variable, mais sous forme d'un quadrillage régulier de l'imagette issue de la zone de capture ZC, avec une grille GR dont chaque carré ou rectangle élémentaire ROI(i,j) sera utilisé ou non pour le contrôle de l'autoexposition selon qu'il se trouve au-dessus ou au-dessous de la frontière F de segmentation entre zone de ciel et zone de sol.

## Revendications

1. Un drone (10) comprenant :
- une caméra (14) liée au corps du drone, comprenant :
• un objectif à champ hémisphérique de type *fisheye* pointant dans une direction fixe par rapport au corps du drone ;
• un capteur numérique recueillant l'image (I) formée par l'objectif ; et
• des moyens de contrôle automatique de l'exposition du capteur ;
- une centrale inertielle (16), apte à mesurer les angles d'Euler (*ϕ*, *θ*, *ψ*) caractérisant l'attitude instantanée du drone par rapport à un repère terrestre absolu et délivrant en sortie des données d'attitude courante du drone ;
- des moyens extracteurs (52), aptes à définir, dans ladite image (I) formée par l'objectif sur l'étendue du capteur, la position d'une zone de capture (ZC) de dimension réduite ;
- des moyens d'asservissement (48, 50, 52), recevant en entrée les données d'attitude courante du drone et aptes à modifier dynamiquement la position et l'orientation de la zone de capture (ZC) dans ladite image (I) dans un sens contraire de celui des changements des valeurs des angles mesurés par la centrale inertielle ;
- des moyens de reprojection (52), recevant en entrée des données d'image, formées de pixels ou de macropixels, d'une zone utile (ZU_{B}) extraite de la zone de capture (ZC) et délivrant en sortie des données d'image redressée correspondantes (ZU_{R}), compensées des distorsions géométriques introduites par l'objectif *fisheye ;* et
- des moyens d'analyse, aptes à définir une pluralité de régions d'intérêt ROI (ROI₁ ... ROI₉ ; ROI(i,j)) réparties dans la zone utile, et à commander les moyens de contrôle dynamique d'exposition en fonction des données d'image respectives contenues dans une imagette issue de la zone utile, dans chaque ROI, et aptes à :
- analyser lesdites données d'image courantes de la zone utile de manière à attribuer à chacune de ces données un coefficient pondérateur représentatif d'une probabilité d'appartenance au ciel ;
- définir dynamiquement à chaque image une frontière de segmentation (F) de la zone utile entre une zone de ciel et une zone de sol, en fonction des coefficients pondérateurs attribués à chaque donnée d'image ;
- définir deux groupes distincts de ROIS, respectivement pour la zone de ciel et pour la zone de sol ; et
- commander les moyens de contrôle dynamique d'exposition en fonction des données d'image respectives contenues dans l'imagette issue de la zone utile, dans des ROIs de l'un desdits groupes sélectionné.

2. Le drone de la revendication 1, dans lequel :
- ledit coefficient pondérateur représentatif d'une probabilité d'appartenance au ciel est un coefficient fonction de la position de la donnée d'image courante analysée par les moyens d'analyse, par rapport à une direction d'horizon théorique (HZ) délivrée par la centrale inertielle.

3. Le drone de la revendication 1, dans lequel :
- ledit coefficient pondérateur représentatif d'une probabilité d'appartenance au ciel est un coefficient fonction des données d'image du voisinage (n) de la donnée d'image courante analysée par les moyens d'analyse.

4. Le drone de la revendication 1, dans lequel :
- le drone comprend des moyens de détermination d'altitude (54), aptes à délivrer une valeur estimée de l'altitude (z) du drone par rapport au sol, et
- ledit coefficient pondérateur représentatif d'une probabilité d'appartenance au ciel est un coefficient fonction de ladite altitude.

5. Le drone de la revendication 1, dans lequel :
- la caméra comprend des moyens d'analyse de l'illuminant de la scène captée par la caméra, et
- ledit coefficient pondérateur représentatif d'une probabilité d'appartenance au ciel est un coefficient fonction dudit illuminant.

6. Le drone de la revendication 1, dans lequel :
- ledit coefficient pondérateur représentatif d'une probabilité d'appartenance au ciel est un coefficient fonction de l'inclinaison du drone en tangage par rapport à l'horizontale.

7. Le drone de la revendication 1, dans lequel les ROIs sont des ROIs (ROI₁ ... ROI₉) dont la dimension et/ou le positionnement sont définis dynamiquement à chaque image dans la zone utile.

8. Le drone de la revendication 1, dans lequel les ROIs sont des ROIs (ROI(i,j)) définies par une grille (GR) de ROIs réparties uniformément et de façon prédéterminée dans la zone utile.

## Patentansprüche

1. Drohne (10), umfassend:
- eine Kamera (14), die mit dem Körper der Drohne verbunden ist, umfassend:
. ein Objektiv mit halbkreisförmigem Feld des Fisheye-Typs, das in einer relativ zu dem Körper der Drohne feststehenden Richtung ausgerichtet ist;
. einen digitalen Sensor, der das von dem Objektiv gebildete Bild (I) auffängt; und
. Mittel zur automatischen Kontrolle der Belichtung des Sensors;
- eine inertiale Zentrale (16), die in der Lage ist, die Euler-Winkel (ϕ, θ, ψ) zu messen, welche die momentane Fluglage der Drohne gegenüber einem absoluten terrestrischen Bezugssystem kennzeichnen, und am Ausgang Datenelemente der aktuellen Fluglage der Drohne bereitstellt;
- Extraktionsmittel (52), die in der Lage sind, in dem von dem Objektiv gebildeten Bild (I) über die Ausdehnung des Sensors die Position einer Erfassungszone (ZC) mit reduzierten Maßen zu definieren;
- Nachführungsmittel (48, 50, 52), die am Eingang Datenelemente der aktuellen Fluglage der Drohne empfangen und in der Lage sind, die Position und die Orientierung der Erfassungszone (ZC) in dem Bild (I) in einer Richtung zu verändern, die zu der der Änderungen der Werte der durch die inertiale Zentrale gemessenen Winkel entgegengesetzt ist;
- Reprojektionsmittel (52), die am Eingang aus Pixeln oder Makropixeln gebildete Bilddatenelemente einer verwertbaren Zone (ZUB), die aus der Erfassungszone (ZC) extrahiert wurde, empfangen und am Ausgang entsprechende Datenelemente des aufgerichteten Bildes (ZUR) bereitstellen, die hinsichtlich der geometrischen Verzerrungen, die durch das Fisheye-Objektiv eingespeist wurden, kompensiert sind; und
- Analysemittel, die in der Lage sind, eine Mehrzahl von Bereichen von Interesse ROI (ROI1 ... ROI9; ROI(i,j)), die in der verwertbaren Zone verteilt sind, zu definieren und die Mittel zur dynamischen Belichtungssteuerung in Abhängigkeit von den jeweiligen Bilddatenelementen zu steuern, die in einem aus der verwertbaren Zone stammenden Kleinbild enthalten sind, in jeder ROI zu steuern; und in der Lage sind:
- die aktuellen Bilddatenelemente der verwertbaren Zone zu analysieren, um jedem dieser Datenelemente einen Gewichtungskoeffizienten zuzuweisen, der für eine Wahrscheinlichkeit der Zugehörigkeit zum Himmel repräsentativ ist;
- zu jedem Bild dynamisch eine Segmentierungsgrenze (F) der verwertbaren Zone zwischen einer Himmelszone und einer Bodenzone zu definieren, in Abhängigkeit von den Gewichtungskoeffizienten, die jedem Bilddatenelement zugewiesen sind;
- zwei verschiedene Gruppen von ROIs zu definieren, für die Himmelszone bzw. für die Bodenzone; und
- die Mittel zur dynamischen Belichtungssteuerung in Abhängigkeit von den jeweiligen Bilddatenelementen zu steuern, die in einem aus der verwertbaren Zone stammenden Kleinbild enthalten sind, in ROIs der einen gewählten der Gruppen.

2. Drohne nach Anspruch 1, wobei
- der für eine Wahrscheinlichkeit der Zugehörigkeit zum Himmel repräsentative Gewichtungskoeffizient ein Koeffizient ist, der eine Funktion der Position des durch die Analysemittel analysierten aktuellen Bilddatenelements gegenüber einer theoretischen Horizontrichtung (H) ist, die durch die inertiale Zentrale bereitgestellt wird.

3. Drohne nach Anspruch 1, wobei
- der für eine Wahrscheinlichkeit der Zugehörigkeit zum Himmel repräsentative Gewichtungskoeffizient ein Koeffizient ist, der eine Funktion der Bilddatenelemente in der Nähe (n) des durch die Analysemittel analysierten aktuellen Bilddatenelements ist.

4. Drohne nach Anspruch 1, wobei
- die Drohne Höhenbestimmungsmittel (54) umfasst, die in der Lage sind, einen geschätzten Wert für die Höhe (z) der Drohne gegenüber dem Boden bereitzustellen, und
- der für eine Wahrscheinlichkeit der Zugehörigkeit zum Himmel repräsentative Gewichtungskoeffizient ein Koeffizient ist, der eine Funktion der Höhe ist.

5. Drohne nach Anspruch 1, wobei
- die Kamera Mittel zur Analyse der Lichtquelle der durch die Kamera aufgenommenen Szene umfasst und
- und der für eine Wahrscheinlichkeit der Zugehörigkeit zum Himmel repräsentative Gewichtungskoeffizient ein Koeffizient ist, der eine Funktion der Lichtquelle ist.

6. Drohne nach Anspruch 1, wobei
- der für eine Wahrscheinlichkeit der Zugehörigkeit zum Himmel repräsentative Gewichtungskoeffizient ein Koeffizient ist, der eine Funktion der Nickneigung der Drohne gegenüber der Horizontalen ist.

7. Drohne nach Anspruch 1, wobei die ROIs ROIs (ROI1 ... ROI9) sind, deren Maße und/oder Positionierung zu jedem Bild in der verwertbaren Zone dynamisch definiert sind.

8. Drohne nach Anspruch 1, wobei die ROIs ROIs (ROI(i,j)) sind, die durch ein Gitter (GR) von ROIs definiert sind, die gleichförmig und in vorherbestimmter Form in der verwertbaren Zone verteilt sind.

## Claims

1. A drone (10) comprising:
- a camera (14) linked to the drone body, comprising:
• a hemispheric-field lens of the *fisheye* type, pointing in a fixed direction with respect to the drone body;
• a digital sensor collecting the image (I) formed by the lens; and
• means for automatic control of the sensor exposure;
- an inertial unit (16), adapted to measure the Euler angles (ϕ, *θ*, ψ) characterizing the instantaneous attitude of the drone with respect to an absolute terrestrial reference system and delivering as an output current drone attitude data;
- extractor means (52), adapted to define, in said image (I) formed by the lens over the extent of the sensor, the position of a capture area (ZC) of reduced size;
- servo-control means (48, 50, 52), receiving as an input the current drone attitude data and adapted to dynamically modify the position and the orientation of the capture area (ZC) in said image (I) in a direction opposite to that of the changes of value of the angles measured by the inertial unit;
- reprojection means (52), receiving as an input image data, formed of pixels or macropixels, of a useful area (ZU_{B}) extracted from the capture area (ZC) and delivering as an output corresponding straightened image data (ZU_{R}), compensated for the geometric distortions introduced by the fisheye lens; and
- analysis means, adapted to define a plurality of regions of interest ROI (ROI₁ ... ROI₉; ROI(i,j)) distributed over the useful area, and to control the dynamic exposure control means as a function of the respective image data contained in the thumbnail from the useful area, in each ROI, and adapted to:
- analyse said current image data of the useful area so as to allocate to each of these data aweighting coefficient representative of a probability of belonging to the sky;
- dynamically define at each image a segmentation boundary (F) of the useful area between a sky area and a ground area, as a function of the weighting coefficients allocated to each image data;
- define two distinct groups of ROIs, for the sky area and for the ground area, respectively; and
- control the dynamic exposure control means as a function of the respective image data contained in the thumbnail from the useful area, in ROIs of one of said selected groups.

2. The drone of claim 1, wherein:
- said weighting coefficient representative of a probability of belonging to the sky is a coefficient function of the position of the current image data analysed by the analysis means, with respect to a theoretical horizon (HZ) direction delivered by the inertial unit.

3. The drone of claim 1, wherein:
- said weighting coefficient representative of a probability of belonging to the sky is a coefficient function of the image data of the neighbouring (n) of the current image data analysed by the analysis means.

4. The drone of claim 1, wherein:
- the drone comprises altitude determination means (54), adapted to deliver an estimated value of the altitude (z) of the drone with respect to the ground, and
- said weighting coefficient representative of a probability of belonging to the sky is a coefficient function of said altitude.

5. The drone of claim 1, wherein:
- the drone comprises means for analysing the illuminant of the scene captured by the camera, and
- said weighting coefficient representative of a probability of belonging to the sky is a coefficient function of said illuminant.

6. The drone of claim 1, wherein:
- said weighting coefficient representative of a probability of belonging to the sky is a coefficient function of the pitch inclination of the drone with respect to the horizontal.

7. The drone of claim 1, wherein the ROIs are ROIs (ROI₁ ... ROI₉) whose size and/or position are dynamically defined at each image in the useful area.

8. The drone of claim 1, wherein the ROIs are ROIs (ROI(i,j)) defined by a grid (GR) of ROIs distributed in a uniform and predetermined manner in the useful area.
